# EUROPÄISCHE PATENTSCHRIFT

(11) **EP 3 631 507 B1**
(45) Veröffentlichungstag und Bekanntmachung des Hinweises auf die Patenterteilung: **02.03.2022**
(21) Anmeldenummer: 18723827.4
(22) Anmeldetag: 09.05.2018
(51) Int. Cl.: G01S 15/04, B60L 53/124, B60L 53/126

(54) **VERFAHREN UND VORRICHTUNG ZUM ERKENNEN WENIGSTENS EINES OBJEKTS IM BEREICH ZWISCHEN EINER PRIMÄRSPULE UND EINER SEKUNDÄRSPULE EINER INDUKTIVEN LADEEINRICHTUNG**
METHOD AND APPARATUS FOR DETECTING AT LEAST ONE OBJECT IN THE AREA BETWEEN A PRIMARY COIL AND A SECONDARY COIL IN AN INDUCTIVE CHARGING DEVICE
PROCÉDÉ ET DISPOSITIF SERVANT À IDENTIFIER AU MOINS UN OBJET DANS LA ZONE ENTRE UNE BOBINE PRIMAIRE ET UNE BOBINE SECONDAIRE D'UN SYSTÈME DE CHARGE INDUCTIF

(30) Priorität: 31.05.2017 DE 102017209095
(43) Veröffentlichungstag der Anmeldung: 08.04.2020
(73) Patentinhaber: Robert Bosch GmbH, 70442 Stuttgart (DE)
(72) Erfinder: SCHUMANN, Michael, 70597 Stuttgart (DE)
(86) Internationale Anmeldenummer: PCT/EP2018/062021
(87) Internationale Veröffentlichungsnummer: WO 2018/219612

(56) Entgegenhaltungen:
- DE-A1-102012 105 615
- DE-A1-102012 219 986
- DE-A1-102013 220 124
- DE-A1-102015 111 259

## Beschreibung

### Stand der Technik

Die Erfindung betrifft eine Verfahren und eine Vorrichtung zum Erkennen wenigstens eines Objekts im Bereich zwischen einer Primärspule und einer Sekundärspule einer induktiven Ladeeinrichtung für ein Fahrzeug.

Die Schrift DE 10 2009 033 236 A1 beschreibt eine Vorrichtung zur induktiven Übertragung elektrischer Energie von einer stationären Einheit mit mindestens einer Primärinduktivität zu einem benachbart zu dieser stehenden Fahrzeug mit mindestens einer Sekundärinduktivität. Die Vorrichtung weist hierbei eine Einrichtung zur Detektion des Vorhandenseins eines Gegenstands innerhalb eines bestimmten Raums auf. Die Detektionseinheit umfasst einen berührungslosen Sensor, beispielsweise einen Ultraschallsensor. Es sind hierbei beispielsweise vier Ultraschallsensoren vorgesehen, die symmetrisch in Form eines Quadrats angeordnet sind. Durch Auswertung der Reflexion zurück zum aussendenden Sensor, durch Auswertung der Reflexionsstärke und durch Auswertung des zeitlichen Verlaufs der Messsignale wird auf die Anwesenheit des Fremdkörpers geschlossen.

Das Dokument DE 10 2012 105 615 A1 beschreibt ein Verfahren zum Erkennen wenigstens eines Objekts im Bereich zwischen einer Primärspule und einer Sekundärspule einer induktiven Ladeeinrichtung für ein Fahrzeug. Hierbei sendet ein Ultraschallsensor Ultraschallsignale in den Zwischenraum und empfängt die reflektierten Signale wieder. Aus einem Vergleich der reflektieren Signale mit Referenzsignalen kann ermittelt werden, ob sich ein Fremdkörper in dem Zwischenraum befindet.

Es ist wichtig, Fremdobjekte innerhalb des Ladebereichs einer induktiven Ladeeinrichtung zu erkennen, da es beispielsweise für Haustiere, die sich innerhalb des Ladebereichs einer induktiven Ladeeinrichtung befinden, zu einer lebensgefährlichen Situation kommen kann. Auch wird die Energieübertragung durch mögliche Fremdobjekte gestört.

Aufgabe der Erfindung ist es, ein Verfahren und eine Vorrichtung zu entwickeln, bei der die Erkennung eines Fremdobjekts im Bereich zwischen Primär- und Sekundärspule einer induktiven Ladeeinrichtung optimiert wird. Dies ist beispielsweise sehr wichtig, da es für Haustiere zu einer lebensgefährlichen Situation kommen kann, wenn diese sich innerhalb des Ladebereichs der induktiven Ladeeinrichtung befinden. Auch wird die Energieübertragung durch mögliche Fremdobjekte gestört,

### Offenbarung der Erfindung

Zur Lösung der Aufgabe wird erfindungsgemäß ein Verfahren zum Erkennen wenigstens eines Objekts im Bereich zwischen einer Primärspule und einer Sekundärspule einer induktiven Ladeeinrichtung für ein Fahrzeug gemäß den Merkmalen des Anspruchs 1 vorgeschlagen. Zudem wird eine Vorrichtung zum Erkennen wenigstens eines Objekts im Bereich zwischen einer Primärspule und einer Sekundärspule einer induktiven Ladeeinrichtung für ein Fahrzeug vorgeschlagen, welches das Verfahren ausführt.

Bei dem erfindungsgemäßen Verfahren zum Erkennen wenigstens eines Objekts im Bereich zwischen Primär- und Sekundärspule einer induktiven Ladeeinrichtung für ein Fahrzeug wird in einem Verfahrensschritt ein erstes Ultraschallsignal mittels eines ersten Ultraschallsenders ausgesendet. Der erste Ultraschallsender ist hierbei an der Primärspule angeordnet, sodass man näherungsweise davon ausgehen kann, dass Ultraschallsender und Primärspule denselben Standort besitzen. In einem weiteren Verfahrensschritt wird eine erste Ultraschallsignalfolge mittels eines ersten, an dem Fahrzeug angeordneten Ultraschallempfängers empfangen. Die erste Ultraschallsignalfolge umfasst hierbei wenigstens ein erstes Direktempfangssignal. Dieses auch als Direktläufer bezeichnete Signal entspricht einer direkten Übertragung des wenigstens einen Ultraschallsignals von dem ersten Ultraschallsender an den ersten Ultraschallempfänger, ohne vorherige Reflexion des Signals an einem oder mehreren Objekten.

Alternativ oder zusätzlich umfasst die erste Ultraschallsignalfolge weitere Empfangssignale, welche jeweils einer indirekten Übertragung des Ultraschallsignals von dem wenigstens einen Ultraschallsender an den ersten Ultraschallempfänger entsprechen. Es handelt sich hierbei also um Signale, welche einfach oder mehrfach an Objekten reflektiert werden, bevor sie den ersten Ultraschallsender erreichen. Es kann sich hierbei aber auch um Störungen im Signalempfang, wie z.B. Rauschsignale handeln. Darauf folgend wird in einem weiteren Verfahrensschritt das erste Direktempfangssignal innerhalb der ersten Ultraschallsignalfolge ermittelt. Alternativ oder zusätzlich werden weitere Empfangssignale innerhalb der ersten Ultraschallsignalfolge ermittelt. Anschließend wird in einem folgenden Verfahrensschritt die erste empfangene Ultraschallsignalfolge, welche das ermittelte Direktempfangssignal und/oder die ermittelten, weiteren Empfangssignalen enthält, mit einer ersten Referenz-Ultraschallsignalfolge verglichen. In Abhängigkeit dieses Vergleichs wird anschließend wenigstens ein Objekt im Bereich zwischen der Primärspule und der Sekundärspule erkannt.

Das beschriebene Verfahren bietet eine kostengünstige und einfach zu realisierende Möglichkeit, um Fremdobjekte in einer induktiven Ladeeinrichtung, insbesondere in einem Zwischenraum zwischen der Primärspule und der Sekundärspule zu erkennen.

Vorzugsweise entspricht die erste Referenz-Ultraschallsignalfolge einer Ultraschallsignalfolge, bei der kein Objekt im Bereich zwischen der Primärspule und der Sekundärspule erkannt wird. Durch festgestellte Abweichungen im Vergleich zwischen empfangener Ultraschallsignalfolge und gespeicherter Referenz-Ultraschallsignalfolge kann somit schnell auf ein Fremdobjekt geschlussfolgert werden. So kann die Referenz-Ultraschallsignalfolge z.B. ein erstes Direktempfangssignal enthalten, da vorgesehen ist, dass der erste Ultraschallempfänger ein erstes Direktempfangssignal enthält, falls kein Fremdobjekt zwischen Primärspule und Sekundärspule erkannt wird. Wird nun beispielsweise im Vergleich zwischen erster Ultraschallsignalfolge und erster Referenz-Ultraschallsignalfolge dieses erste Direktempfangssignal als Unterschied ermittelt, kann davon ausgegangen werden, dass das ausgesendete Ultraschallsignal von einem Fremdobjekt reflektiert wurde und entsprechend ein Fremdobjekt erkannt werden. Es kann aber auch sein, dass sich die empfangene erste Ultraschallsignalfolge und die Referenz-Ultraschallsignalfolge um ein erstes Empfangssignal unterscheiden. Dieses erste Empfangssignal gehört zu den weiteren Empfangssignalen und wird dann in der ersten Ultraschallsignalfolge ermittelt, wenn das ausgesendete Ultraschallsignal von einen Fremdobjekt reflektiert und von dort aus direkt weiter an den Ultraschallempfänger geleitet wurde. Solche weiteren Empfangssignale können sowohl dann auftreten, wenn vorgesehen ist, dass der Ultraschallempfänger ein Direktempfangssignal empfangen soll, wie auch dann, wenn der Ultraschallempfänger überhaupt kein Direktempfangssignal empfangen kann.

Bevorzugt wird ein erstes Empfangssignal, welches einer indirekten Übertragung des ersten Ultraschallsignals von dem ersten Ultraschallsender an den ersten Ultraschallempfänger und einer Reflektion des ersten Ultraschallsignals an dem Objekt entspricht, ermittelt, falls ein erster Schwellenwert durch eine Amplitude des ersten Empfangssignals überschritten wird. Das erste Direktempfangssignal wird ermittelt, falls ein zweiter Schwellenwert durch eine Amplitude des ersten Direktempfangssignals überschritten wird. Da das erste Direktempfangssignal vor dem Empfang nicht reflektiert wird, besitzt es im Vergleich zu dem ersten Empfangssignal mehr Schallenergie und eine entsprechend größere Amplitude. Es ist dadurch vorteilhaft, den zweiten Schwellenwert größer als den ersten Schwellenwert zu wählen, um besser zwischen Direktempfangssignalen und weiteren Empfangssignalen unterscheiden zu können.

In einer alternativen Ausgestaltung des Verfahrens wird vorzugsweise eine zweite Ultraschallsignalfolge mittels eines zweiten an dem Fahrzeug angeordneten Ultraschallempfängers empfangen. Die zweite Ultraschallsignalfolge umfasst hierbei ein zweites Direktempfangssignal, welches einer direkten Übertragung des wenigstens einen Ultraschallsignals von dem wenigstens einen Ultraschallsender an den zweiten Ultraschallempfänger entspricht. Zusätzlich umfasst die zweite Ultraschallsignalfolge weitere Empfangssignale, welche jeweils einer indirekten Übertragung des ersten Ultraschallsignals von dem wenigstens einen Ultraschallsender an den zweiten Ultraschallempfänger entsprechen. In einem weiteren Verfahrensschritt wird ein zweites Direktempfangssignal innerhalb der zweiten Ultraschallsignalfolge ermittelt. Alternativ oder zusätzlich werden weitere Empfangssignale innerhalb der zweiten Ultraschallsignalfolge ermittelt. Anschließend wird in einem folgenden Verfahrensschritt die erste empfangene Ultraschallsignalfolge mit einer Referenz-Ultraschallsignalfolge verglichen. Hierbei wird jedoch nun als Referenz-Ultraschallsignalfolge die zweite empfangene Ultraschallsignalfolge verwendet. Falls vorgesehen ist, dass der erste und der zweite Ultraschallempfänger jeweils wenigstens ein Direktempfangssignal empfangen können, diese jedoch kein erstes Direktempfangssignal empfangen, kann ein Fremdobjekt erkannt werden. Falls ein erstes Empfangssignal, welches einer indirekten Übertragung des ersten Ultraschallsignals von dem ersten Ultraschallsender an den ersten Ultraschallempfänger und einer Reflektion des ersten Ultraschallsignals an dem Objekt entspricht, im Vergleich zwischen den beiden Ultraschallsignalfolgen festgestellt wird, ist dies auch ein Hinweis auf ein Fremdobjekt. Genauso ist ein zweites Empfangssignal, welches einer indirekten Übertragung des ersten Ultraschallsignals von dem ersten Ultraschallsender an den zweiten Ultraschallempfänger und einer Reflektion des ersten Ultraschallsignals an dem Objekt entspricht, ein Hinweis auf ein Fremdobjekt zwischen Primärspule und Sekundärspule. Vorzugsweise wird das erste Empfangssignal in Abhängigkeit einer Überschreitung eines ersten Schwellenwertes durch eine Amplitude des ersten Empfangssignals ermittelt. Das erste Direktempfangssignal wird in Abhängigkeit einer Überschreitung eines zweiten Schwellenwertes durch eine Amplitude des ersten Direktempfangssignals ermittelt. Hierbei ist der zweite Schwellenwert größer als der erste Schwellenwert. Das zweite Empfangssignal wird in Abhängigkeit einer Überschreitung eines dritten Schwellenwertes durch eine Amplitude des zweiten Schwellenwertes ermittelt. Das zweite Direktempfangssignal wird in Abhängigkeit einer Überschreitung eines vierten Schwellenwertes durch eine Amplitude des zweiten Direktempfangssignals ermittelt.

Hierbei ist vorzugsweise der erste Schwellenwert unterschiedlich zu dem dritten Schwellenwert und der zweite Schwellenwert unterschiedlich zu dem vierten Schwellenwert. Somit können die Schwellenwerte besser auf eine unterschiedliche Sensitivität der Ultraschallempfänger eingestellt werden. Alternativ kann jedoch auch vorgesehen sein, dass der erste Schwellenwert gleich dem dritten Schwellenwert und der zweite Schwellenwert gleich zu dem vierten Schwellenwert ist. Somit wird eine bessere Vergleichbarkeit der empfangenen Direktempfangssignale und/oder weiterer Empfangssignale untereinander ermöglicht.

Vorzugsweise wird jede Ultraschallsignalfolge in einem zugehörigen zeitlich festgelegten Messfenster empfangen. Die zeitliche Dauer der Messfenster ist entsprechend festgelegt. Die Messfenster der jeweiligen Ultraschallempfänger sind hierbei zueinander synchronisiert. Das bedeutet, alle Messfenster starten und enden zur gleichen Zeit. Somit können die Ultraschallsignalfolgen besser mit Referenz-Ultraschallsignalfolgen verglichen werden.

Die Erfindung umfasst zudem eine Vorrichtung zum Erkennen wenigstens eines Objekts im Bereich zwischen einer Primärspule und einer Sekundärspule einer induktiven Ladeeinrichtung für ein Fahrzeug. Die Vorrichtung führt hierbei das zuvor beschriebene Verfahren zum Erkennen eines Objekts zwischen Primärspule und Sekundärspule aus. Die Vorrichtung umfasst einen ersten an der Primärspule angeordneten Ultraschallsender, der wenigstens ein erstes Ultraschallsignal aussendet. Zudem umfasst die Vorrichtung einen ersten Ultraschallempfänger, der eine erste Ultraschallsignalfolge mit wenigstens einem ersten Direktempfangssignal und weiteren Empfangssignalen empfängt. Die Vorrichtung umfasst zusätzlich eine Recheneinheit, die innerhalb der ersten Ultraschallsignalfolge das erste Direktempfangssignal und/oder weitere Empfangssignale ermittelt und die erste empfangene Ultraschallsignalfolge mit einer Referenz-Ultraschallsignalfolge vergleicht. Die Recheneinheit ist außerdem dazu ausgebildet, in Abhängigkeit des Vergleichs zwischen der ersten Ultraschallsignalfolge und der Referenz-Ultraschallsignalfolge wenigstens ein Objekt im Bereich zwischen der Primärspule und der Sekundärspule zu erkennen.

Vorzugsweise umfasst die Vorrichtung zusätzlich einen zweiten, dritten und vierten Ultraschallempfänger. Der zweite Ultraschallempfänger ist hierbei genauso wie der erste Ultraschallempfänger so am Fahrzeug angeordnet, dass er ein Direktempfangssignal empfangen kann. Alternativ oder zusätzlich kann der zweite Ultraschallempfänger weitere Empfangssignale empfangen. Der dritte und vierte Ultraschallempfänger sind an dem Fahrzeug so angeordnet, dass diese Ultraschallempfänger nur weitere Empfangssignale empfangen können. Die Recheneinheit ist hierbei dazu ausgebildet, innerhalb der jeweiligen Ultraschallsignalfolgen die Direktempfangssignale und/oder weitere Empfangssignale zu ermitteln. Außerdem ist die Recheneinheit dazu ausgebildet, die erste empfangene Ultraschallsignalfolge mit der zweiten Ultraschallsignalfolge des zweiten Ultraschallempfängers zu vergleichen. Hierbei erkennt die Recheneinheit ein Objekt im Bereich zwischen Primärspule und Sekundärspule, falls die erste und/oder zweite Ultraschallsignalfolge kein erstes Direktempfangssignal enthält. Alternativ oder zusätzlich ist die Recheneinheit hierbei dazu ausgebildet, ein Fremdobjekt zu erkennen, falls die erste Ultraschallsignalfolge ein erstes Empfangssignal enthält. Alternativ oder zusätzlich ist die Recheneinheit dazu ausgebildet, ein Fremdobjekt zu erkennen, falls die zweite Ultraschallsignalfolge ein zweites Empfangssignal enthält. Die Recheneinheit ist außerdem dazu ausgebildet, die erste empfangene Ultraschallsignalfolge mit der dritten Ultraschallsignalfolge des dritten Ultraschallempfängers zu vergleichen. Hierbei ist die Recheneinheit zusätzlich dazu ausgebildet, ein Objekt zwischen Primärspule und Sekundärspule zu erkennen, falls die dritte Ultraschallsignalfolge ein drittes Empfangssignal enthält, welches einer indirekten Übertragung des ersten Ultraschallsignals von dem ersten Ultraschallsender an den dritten Ultraschallempfänger und einer Reflektion des ersten Ultraschallsignals an dem Objekt entspricht. Die Recheneinheit ist außerdem bei dieser Anordnung von Ultraschallempfängern dazu ausgebildet, die erste empfangene Ultraschallsignalfolge mit der vierten Ultraschallsignalfolge des vierten Ultraschallempfängers zu vergleichen. Hierbei ist die Recheneinheit zusätzlich dazu ausgebildet, ein Objekt zwischen Primärspule und Sekundärspule zu erkennen, falls die vierte Ultraschallsignalfolge ein viertes Empfangssignal enthält, welches einer indirekten Übertragung des ersten Ultraschallsignals von dem ersten Ultraschallsender an den vierten Ultraschallempfänger und einer Reflektion des ersten Ultraschallsignals an dem Objekt entspricht. Durch diese beschriebene Anordnung von Ultraschallempfängern kann ein Fremdobjekts sicherer bestimmt werden. Des Weiteren umfasst die Vorrichtung vorzugsweise einen zweiten an der Primärspule der induktiven Ladeeinrichtung angeordneten Ultraschallsender, der zum Aussenden wenigstens eines zweiten Ultraschallsignals ausgebildet ist. Der erste und zweite Ultraschallsender sind hierbei so an der Primärspule angeordnet, dass das erste Ultraschallsignal in Richtung des zweiten Ultraschallsenders und das zweite Ultraschallsignal in Richtung des ersten Ultraschallsenders ausgesendet wird.

Der dritte und vierte Ultraschallempfänger sind hierbei derart am Fahrzeug angeordnet, dass von dem dritten Ultraschallempfänger ein drittes und von dem vierten Ultraschallempfänger ein viertes Direktempfangssignal empfangen werden kann. Das dritte und vierte Direktempfangssignal bezeichnet in diesem Fall ein direkt übertragenes Ultraschallsignal von dem zweiten Ultraschallsender an den dritten und vierten Ultraschallempfänger. Die Redundanz der Vorrichtung wird damit noch erhöht. Damit die ausgesendeten Ultraschallsignale des ersten und zweiten Ultraschallsenders besser bei der Erkennung des Fremdobjekts voneinander zu unterscheiden sind, ist vorzugsweise vorgesehen, dass der erste und der zweite Ultraschallsender abwechselnd codierte Ultraschallsignale aussenden.

Vorzugsweise ist vorgesehen, dass jeder der Ultraschallsender dazu ausgebildet ist, wiederholt ein erstes und/oder zweites Ultraschallsignal auszusenden. Jeder Ultraschallempfänger ist hierbei dazu ausgebildet, mindestens eine weitere Ultraschallsignalfolge zu empfangen, die auf die zuvor empfangene Ultraschallsignalfolge zeitlich folgt. Die Recheneinheit erkennt wenigstens ein Objekt im Bereich zwischen einer Primärspule und einer Sekundärspule einer induktiven Ladeeinrichtung in Abhängigkeit eines Vergleichs von aufeinander folgenden Ultraschallsignalfolgen mit den zugehörigen Referenz-Ultraschallsignalfolgen zu erkennen. Dies bietet die Möglichkeit, die zeitliche Veränderung von empfangenen Signalen zu ermitteln und somit beispielsweise Rückschlüsse über die Bewegung eines dynamischen Fremdobjekts im Bereich zwischen der Primärspule und einer Sekundärspule ziehen zu können.

### Beschreibung der Zeichnungen

Figur la zeigt eine erste Ausführungsform der Vorrichtung zum Erkennen wenigstens eines Objekts im Bereich zwischen einer Primärspule und einer Sekundärspule einer induktiven Ladeeinrichtung. In der dargestellten Situation ist kein Objekt zwischen Primär- und Sekundärspule vorhanden.
Figur 1b zeigt beispielhaft eine erste, zweite, dritte und vierte Ultraschallsignalfolge anhand der in Figur la dargestellten Situation.
Figur 2a zeigt eine erste Ausführungsform der Vorrichtung zum Erkennen wenigstens eines Objekts im Bereich zwischen einer Primärspule und einer Sekundärspule einer induktiven Ladeeinrichtung. In der dargestellten Situation ist ein Objekt zwischen Primär- und Sekundärspule auf einer ersten Position angeordnet.
Figur 2b zeigt beispielhaft eine erste, zweite, dritte und vierte Ultraschallsignalfolge anhand der in Figur 2a dargestellten Situation.
Figur 3a zeigt eine erste Ausführungsform der Vorrichtung zum Erkennen wenigstens eines Objekts im Bereich zwischen einer Primärspule und einer Sekundärspule einer induktiven Ladeeinrichtung. In der dargestellten Situation ist ein Objekt zwischen Primär- und Sekundärspule auf einer zweiten Position angeordnet.
Figur 3b zeigt beispielhaft eine erste, zweite, dritte und vierte Ultraschallsignalfolge anhand der in Figur 3a dargestellten Situation.
Figur 4 zeigt eine zweite Ausführungsform der Vorrichtung zum Erkennen wenigstens eines Objekts im Bereich zwischen einer Primärspule und einer Sekundärspule einer induktiven Ladeeinrichtung.
Figur 5a zeigt einen ersten Verfahrensablauf zum Erkennen wenigstens eines Objekts im Bereich zwischen einer Primärspule und einer Sekundärspule einer induktiven Ladeeinrichtung für ein Fahrzeug.
Figur 5b zeigt einen zweiten Verfahrensablauf zum Erkennen wenigstens eines Objekts im Bereich zwischen einer Primärspule und einer Sekundärspule einer induktiven Ladeeinrichtung für ein Fahrzeug.

### Ausführungsbeispiele

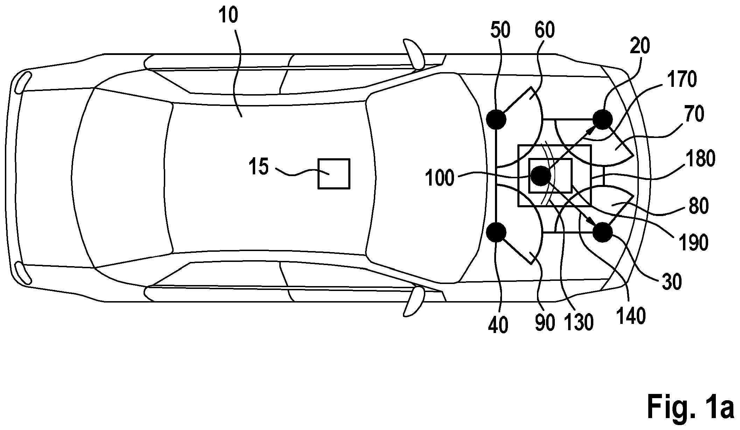

Figur 1a zeigt ein Fahrzeug 10, welches derart positioniert ist, dass Primärspule 190 und Sekundärspule 180 übereinander liegen und eine induktive Energieübertragung optimal durchgeführt werden kann. An einem seitlichen Rand der Primärspule 190 ist ein erster Ultraschallsender 100 angeordnet, der ein erstes Ultraschallsignal 130 in Form von Schallwellen aussendet. An dem Unterboden des Fahrzeugs 10 sind ein erster Ultraschallempfänger 20, ein zweiter Ultraschallempfänger 30, ein dritter Ultraschallempfänger 40 und ein vierter Ultraschallempfänger 50 derart um die Sekundärspule 180 der induktiven Ladeeinrichtung angeordnet, dass die Ultraschallempfänger 20, 30, 40 und 50 jeweils die Ecken eines Rechtecks bilden und sich die Sekundärspule zentrisch innerhalb dieses aufgespannten Rechtecks befindet. Der erste Ultraschallsender 100 sendet ein Ultraschallsignal 130 in Richtung des ersten Ultraschallempfängers 20 und des zweiten Ultraschallempfängers 30. Der erste Empfangsbereich 70 des ersten Ultraschallempfängers 20 und der zweite Empfangsbereich 80 des zweiten Ultraschallempfängers sind derart ausgerichtet, dass die Ultraschallempfänger 20 und 30 ein erstes Direktempfangssignal 170 und ein zweites Direktempfangssignal 140 empfangen können. Da sich in der dargestellten Situation kein Objekt zwischen Primärspule 190 und Sekundärspule 180 befindet, empfangen die beiden Ultraschallempfänger 20 und 30 auch tatsächlich Direktempfangssignale.

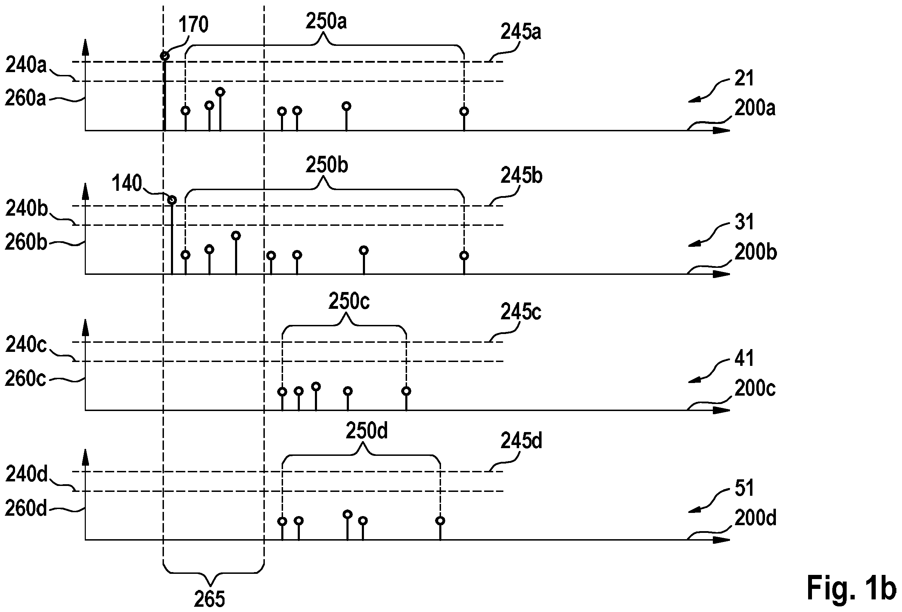

Figur 1b zeigt eine möglich erste 21, zweite 31, dritte 41 und vierte Ultraschallsignalfolge 51 des zugehörigen ersten 20, zweiten 30, dritten 40 und vierten Ultraschallempfängers 50, welche durch die in Figur la dargestellte Situation entstehen können. Auf den X-Achsen 200a, 200b, 200c und 200d der jeweiligen Ultraschallsignalfolgen 21, 31, 41 und 51 ist beispielsweise die Zeit aufgetragen und die Y-Achsen 260a, 260b, 260c und 260d kennzeichnen die Größe der Amplituden der empfangenen Ultraschallsignale. Jede Ultraschallsignalfolge 21, 31, 41 und 51 wird in einem zugehörigen zeitlich festgelegten Messfenster 265 empfangen, die zueinander synchronisiert sind. Die Recheneinheit 15, welche in dieser Darstellung als Teil des Fahrzeugs 10 dargestellt ist, ist dazu ausgebildet, innerhalb der ersten Ultraschallsignalfolge 21 das erste Direktempfangssignal 170 zu ermitteln. Das erste Direktempfangssignal 170 wird mittels der Recheneinheit 15 ermittelt, indem es einen zweiten Schwellenwert 245a überschreitet. Zu erkennen ist außerdem ein erster Schwellenwert 240a, bei dessen Überschreitung die Recheneinheit 15 erste Empfangssignale ermittelt. Die Recheneinheit 15 ist außerdem dazu ausgebildet, weitere Empfangssignale 250a innerhalb der ersten Ultraschallsignalfolge zu ermitteln, welche beispielsweise Störsignale oder mehrfach reflektierte Signale darstellen können. Auch die zweite Ultraschallsignalfolge 32, die dritte Ultraschallsignalfolge 43 und die vierte Ultraschallsignalfolge enthalten solche zugehörigen weiteren Empfangssignale 250b, 250c und 25od. Die Recheneinheit 15 vergleicht die erste Ultraschallsignalfolge 21 mit der zweiten Ultraschallsignalfolge 31, wobei festgestellt wird, dass die erste Ultraschallsignalfolge 21 ein erstes Direktempfangssignal 170 und die zweite Ultraschallsignalfolge 31 ein zweites Direktempfangssignal 180 enthalten. Außerdem wird festgestellt, dass sowohl die erste Ultraschallsignalfolge 21, wie auch die zweite Ultraschallsignalfolge kein erstes bzw. zweites Empfangssignal enthalten. Außerdem stellt die Recheneinheit 15 durch Vergleich mit der dritten 41 und vierten Ultraschallsignalfolge 51 fest, dass diese kein drittes bzw. viertes Empfangssignal enthalten. Die Recheneinheit 15 schließt daraus, dass sich kein Objekt zwischen Primärspule 190 und Sekundärspule 180 befindet.

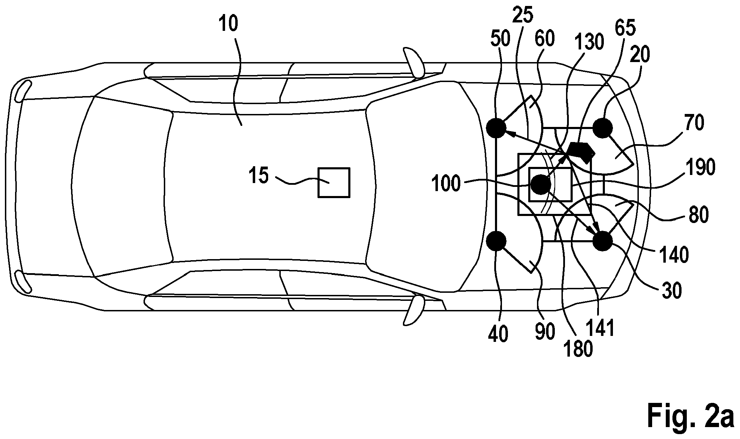

Figur 2a zeigt im Unterschied zu Figur la eine Situation, bei der sich ein Objekt 65 zwischen Primärspule 190 und Sekundärspule 180 befindet. Das Objekt 65 ist derart zwischen Primärspule 190 und Sekundärspule 180 angeordnet, dass der erste Ultraschallempfänger 20 kein erstes Direktempfangssignal empfangen kann. Durch Reflektion des ersten Ultraschallsignals 130 an dem Objekt 65 entsteht ein zweites Empfangssignal 140, welches indirekt von dem ersten Ultraschallsender 100 an den zweiten Ultraschallempfänger 30 übertragen wird. Außerdem wird das erste Ultraschallsignal 130 an dem Objekt 65 derart reflektiert, dass auch der vierte Ultraschallempfänger 50 analog ein viertes Empfangssignal 25 empfangen kann.

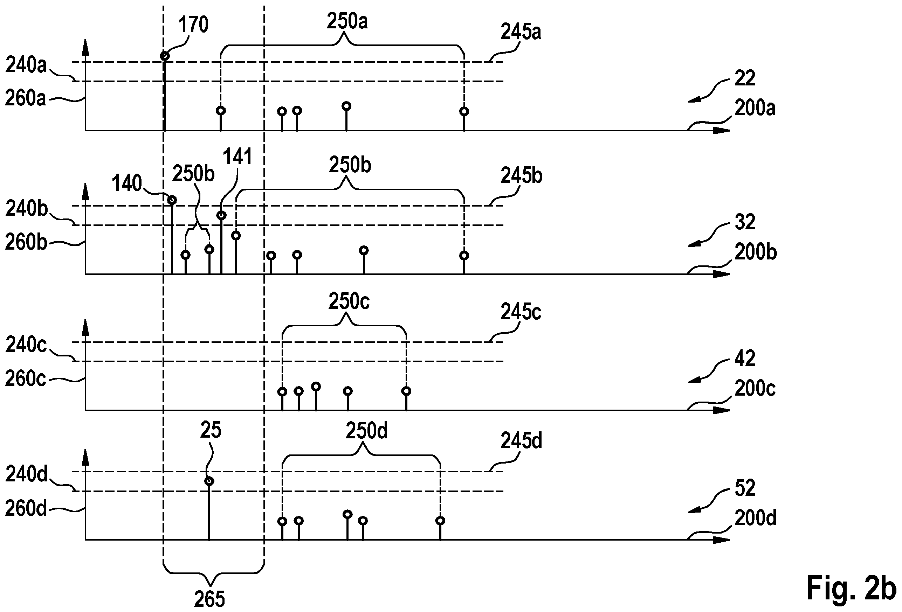

Figur 2b zeigt eine möglich erste 22, zweite 32, dritte 42 und vierte Ultraschallsignalfolge 52 des zugehörigen ersten 20, zweiten 30, dritten 40 und vierten Ultraschallempfängers 50, welche durch die in Figur 2a dargestellte Situation entstehen können. Im Unterschied zu Figur 1b kann die Recheneinheit 15 nun in der ersten Ultraschallsignalfolge 22 kein erstes Direktempfangssignal ermitteln. Zudem wird durch Vergleich der ersten Ultraschallsignalfolge 22 mit der zweiten Ultraschallsignalfolge 32 festgestellt, dass die zweite Ultraschallsignalfolge das zweite Empfangssignal 141 enthält. Außerdem stellt die Recheneinheit durch Vergleich der ersten Ultraschallsignalfolge 22 mit der vierten Ultraschallsignalfolge 52 fest, dass die vierte Ultraschallsignalfolge 52 das vierte Empfangssignal 25 enthält. Die Recheneinheit 15 schließt daraus, dass sich ein Objekt 65 zwischen Primärspule 190 und Sekundärspule 180 befindet. Auch die Lage des Objekts 65 kann die Recheneinheit durch die erkannten Abweichungen im durchgeführten Vergleich ermitteln. Entstehen nun bei zeitlich aufeinander folgenden Ultraschallsignalfolgen zeitliche Unterschiede beim Empfang der Direktempfangssignale bzw. Empfangssignale innerhalb des Messfensters 265, kann die Recheneinheit 15 daraus ebenfalls schlussfolgern, dass es sich um ein dynamisches Objekt 65 handelt und wie sich dieses bewegt.

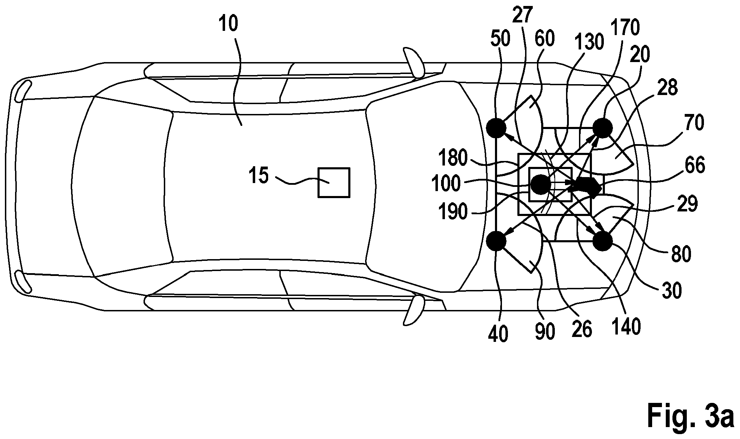

Figur 3a zeigt im Unterschied zu Figur 1a eine Situation, bei der sich ein Objekt 66 zwischen Primärspule 190 und Sekundärspule 180 befindet. Im Unterschied zur dargestellten Situation in Figur 2a befindet sich das Objekt 66 hierbei zentral zwischen erstem 30 und zweitem Ultraschallempfänger 40, sodass der erste Ultraschallempfänger 20 ein erstes Direktempfangssignal 170 und der zweite Ultraschallempfänger empfangen kann. Durch Reflektion des ersten Ultraschallsignals 130 an dem Objekt 66 entsteht ein erstes Empfangssignal 28, welches indirekt von dem ersten Ultraschallsender 100 an den ersten Ultraschallempfänger 20 übertragen wird. Außerdem wird das erste Ultraschallsignal 130 an dem Objekt 66 derart reflektiert, dass auch der zweite Ultraschallempfänger 50 ein zweites Empfangssignal 25 empfangen kann. Ebenfalls empfängt der dritte Ultraschallempfänger 40 ein drittes Empfangssignal 26 und der vierte Ultraschallempfänger 50 ein viertes Empfangssignal 27.

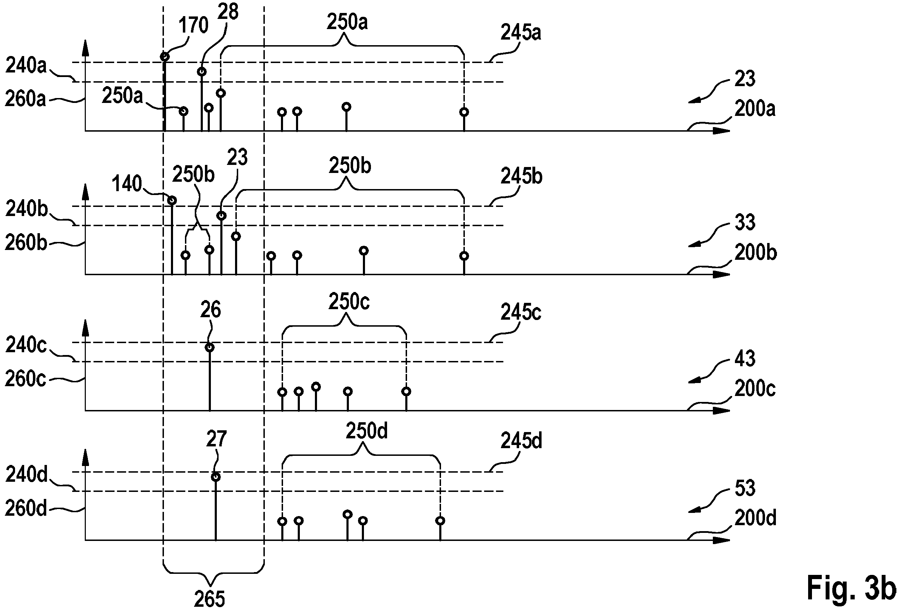

Figur 3b zeigt eine möglich erste 23, zweite 33, dritte 43 und vierte Ultraschallsignalfolge 53 des zugehörigen ersten 20, zweiten 30, dritten 40 und vierten Ultraschallempfängers 50, welche durch die in Figur 3a dargestellte Situation entstehen können. Im Unterschied zu Figur 2b kann die Recheneinheit 15 nun in der ersten Ultraschallsignalfolge 22 kein erstes Direktempfangssignal ermitteln. Zudem wird durch Vergleich der ersten Ultraschallsignalfolge 22 mit der zweiten Ultraschallsignalfolge 32 festgestellt, dass die zweite Ultraschallsignalfolge ein zweites Empfangssignal 141 enthält. Die erste Ultraschallsignalfolge enthält jedoch ein erstes Empfangssignal 28, die zweite Ultraschallsignalfolge ein zweites Empfangssignal 29, die dritte Ultraschallsignalfolge ein drittes Empfangssignal 26 und die vierte Ultraschallsignalfolge ein viertes Empfangssignal 27. Die Recheneinheit 15 ermittelt daraus, dass sich ein Objekt 66 zwischen Primärspule 190 und Sekundärspule 180 befindet. Auch die Lage und eine mögliche Bewegung des Objekts 66 kann die Recheneinheit 15 wieder ermitteln.

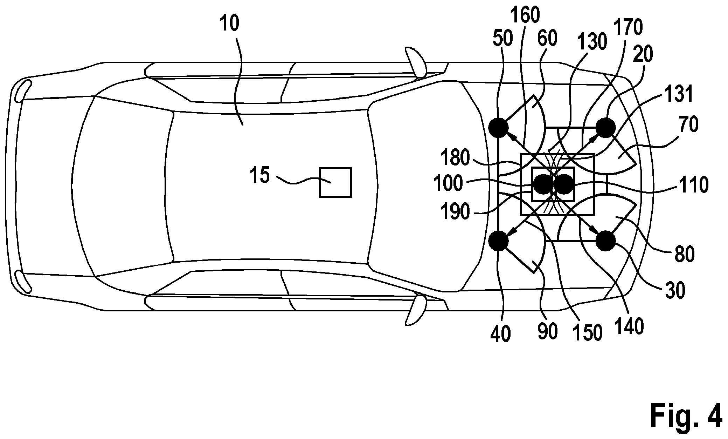

Figur 4a zeigt im Unterschied zu den Figuren 1a, 2a und 3a eine Vorrichtung zum Erkennen wenigstens eines Objekts im Bereich zwischen Primärspule 190 und Sekundärspule 180, die einen zusätzlichen zweiten Ultraschallsender 110, der ebenfalls an einem seitlichen Rand der Primärspule 190 angeordnet ist, umfasst. Der zweite Ultraschallsender 110 sendet das zweite Ultraschallsignal 131 in Form von Schallwellen in Richtung des ersten Ultraschallsenders 100. Die dritte Schallkeule 90 des dritten Ultraschallempfängers 40 und die vierte Schallkeule 60 des vierten Ultraschallempfängers 50 sind derart ausgerichtet, dass der dritte Ultraschallempfänger 40 ein drittes Direktempfangssignal 150 von dem zweiten Ultraschallsender 110 und der vierte Ultraschallempfänger 50 ein viertes Direktempfangssignal 160 von dem zweiten Ultraschallsender 110 empfangen kann. Der erste 100 und zweite Ultraschallsender 110 senden hierbei beispielsweise das erste 130 und zweite Ultraschallsignal 131 abwechselnd aus. Um die Ultraschallsignale noch besser voneinander unterscheiden zu können, können die Ultraschallsignale hierbei codiert sein.

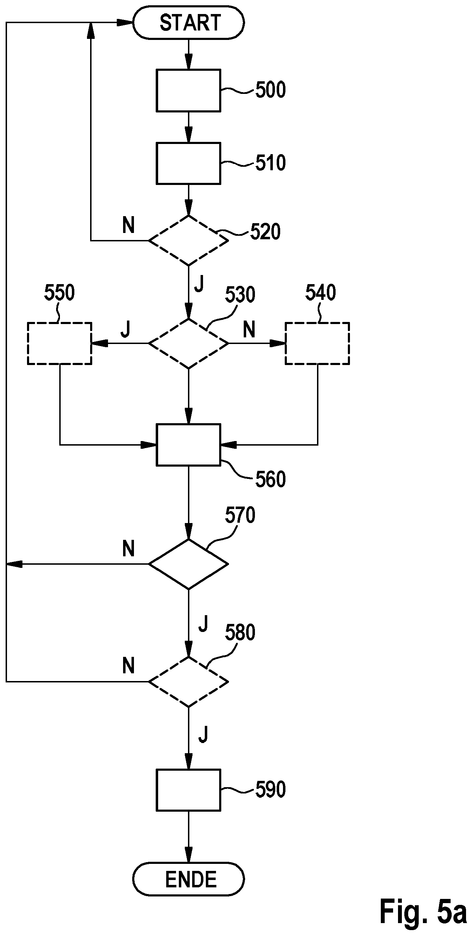

Figur 5a zeigt eine ersten Verfahrensablauf zum Erkennen wenigstens eines Objekts im Bereich zwischen einer Primärspule und einer Sekundärspule einer induktiven Ladeeinrichtung für ein Fahrzeug gemäß einer möglichen Ausführung der Erfindung. In einem ersten Verfahrensschritt 500 wird hierbei zunächst ein erstes Ultraschallsignal mittels eines ersten Ultraschallsenders ausgesendet. In einem auf den Verfahrensschritt 500 folgenden Verfahrensschritt 510 wird eine erste Ultraschallsignalfolge mittels eines ersten Ultraschallempfängers empfangen. In einem auf den Verfahrensschritt 510 folgenden Verfahrensschritt 560 wird ein erstes Direktempfangssignal und/oder weitere Empfangssignale innerhalb der ersten Ultraschallsignalfolge mittels einer Recheneinheit ermittelt. In einem auf den Verfahrensschritt 560 folgenden Verfahrensschritt 570 wird die erste empfangene Ultraschallsignalfolge mit einer ersten Referenz-Ultraschallsignalfolge verglichen. Hierbei kennzeichnet die Referenz-Ultraschallsignalfolge beispielsweise eine gespeicherte Ultraschallsignalfolge, bei der kein Objekt im Bereich zwischen der Primärspule und der Sekundärspule erkannt wird. Wird keine Abweichung festgestellt, wird das Verfahren beendet oder alternativ von vorne gestartet. Wird bei dem Vergleich eine Abweichung festgestellt, wird in einem auf den Verfahrensschritt 570 folgenden Verfahrensschritt 590 ein Objekt im Bereich zwischen der Primärspule und der Sekundärspule erkannt. Daraufhin wird das Verfahren beendet.

Optional wird in einem auf den Verfahrensschritt 510 folgenden Verfahrensschritt 520 überprüft, ob die Amplitude eines Signals innerhalb der ersten Ultraschallsignalfolge einen ersten Schwellenwert überschreitet. Überschreitet keine Amplitude den ersten Schwellenwert, wird das Verfahren beendet oder alternativ von vorne gestartet. Überschreitet eine Amplitude wenigstens eines Signals den ersten Schwellenwert wird mit Verfahrensschritt 520 fortgefahren. Dort wird geprüft, ob eine Amplitude eines Signals zusätzlich einen zweiten Schwellenwert überschreitet, welcher größer als der erste Schwellenwert ist. Überschreitet eine Amplitude eines Signals diesen zweiten Schwellenwert, wird im Verfahrensschritt 550 ein erstes Direktempfangssignal ermittelt. Überschreitet die Amplitude des Signals den zweiten Schwellenwert nicht, wird im Verfahrensschritt 540 ein erstes Empfangssignal ermittelt.

Optional wird in einem auf den Verfahrensschritt 570 folgenden Verfahrensschritt 580 geprüft, welche Abweichung bei dem Vergleich zwischen erster Ultraschallsignalfolge und Referenz-Ultraschallsignalfolge festgestellt wurde. Falls bei dem Vergleich in der ersten Ultraschallsignalfolge kein erstes Direktempfangssignal und/oder ein erstes, ermitteltes Empfangssignal festgestellt wurden, wird ein Objekt im folgenden Verfahrensschritt 590 erkannt

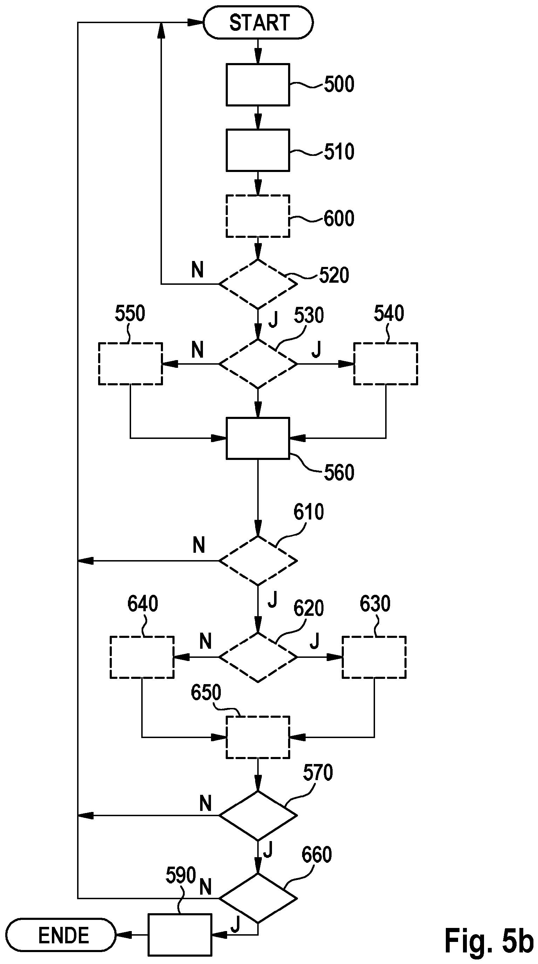

Figur 5b zeigt einen zweiten Verfahrensablauf zum Erkennen wenigstens eines Objekts im Bereich zwischen einer Primärspule und einer Sekundärspule einer induktiven Ladeeinrichtung für ein Fahrzeug. Optional wird in dem dargestellten Verfahrensablauf im Unterschied zu dem Verfahrensablauf in Figur 5a in einem auf den Verfahrensschritt 510 folgenden Verfahrensschritt 600 eine zweite Ultraschallsignalfolge mittels eines zweiten Ultraschallempfängers empfangen. In einem auf den Verfahrensschritt 560 folgenden Verfahrensschritt 610 wird überprüft, ob die Amplitude eines Signals innerhalb der zweiten Ultraschallsignalfolge einen dritten Schwellenwert überschreitet. Überschreitet keine Amplitude den ersten Schwellenwert, wird das Verfahren beendet oder alternativ von vorne gestartet. Überschreitet eine Amplitude wenigstens eines Signals den dritten Schwellenwert wird mit Verfahrensschritt 620 fortgefahren.

Dort wird geprüft, ob eine Amplitude eines Signals zusätzlich einen vierten Schwellenwert überschreitet, welcher größer als der dritte Schwellenwert ist. Überschreitet eine Amplitude eines Signals diesen vierten Schwellenwert, wird im Verfahrensschritt 640 ein zweites Direktempfangssignal ermittelt. Überschreitet die Amplitude des Signals den vierten Schwellenwert nicht, wird im Verfahrensschritt 630 ein zweites Empfangssignal ermittelt. Daraufhin werden in Verfahrensschritt 650 ein zweites Direktempfangssignal und/oder weitere Empfangssignale innerhalb der zweiten Ultraschallsignalfolge ermittelt. In dem Verfahrensschritt 570 wird nun wieder die erste empfangene Ultraschallsignalfolge mit einer Referenz-Ultraschallsignalfolge verglichen, wobei jedoch nun als Referenz-Ultraschallsignalfolge die zweite Ultraschallsignalfolge verwendet wird. In dem auf den Verfahrensschritt 570 folgenden optionalen Verfahrensschritt 660 wird überprüft, welche Abweichung bei dem Vergleich zwischen erster Ultraschallsignalfolge und Referenz-Ultraschallsignalfolge festgestellt wurde. Falls dabei festgestellt wird, dass die erste Ultraschallsignalfolge kein erstes Direktempfangssignal enthält und/oder die zweite Ultraschallsignalfolge kein zweites Direktempfangssignal enthält und/oder die erste Ultraschallsignalfolge ein erstes Empfangssignal enthält und/oder die zweite Ultraschallsignalfolge ein zweites Empfangssignal enthält, wird ein Objekt im folgenden Verfahrensschritt 590 erkannt.

## Patentansprüche

1. Verfahren zum Erkennen (590) wenigstens eines Objekts (65, 66) im Bereich zwischen einer Primärspule (190) und einer Sekundärspule (180) einer induktiven Ladeeinrichtung für ein Fahrzeug (10), wobei das Verfahren die Verfahrensschritte umfasst:
- Aussenden (500) eines ersten Ultraschallsignals (130) mittels eines ersten, an der Primärspule (190) der induktiven Ladeeinrichtung angeordneten Ultraschallsenders (100), und
- Empfangen (510) einer ersten Ultraschallsignalfolge (21, 22, 23) mittels eines ersten, an dem Fahrzeug (10) angeordneten Ultraschallempfängers (20), wobei die erste Ultraschallsignalfolge (21, 22, 23)
- wenigstens ein erstes Direktempfangssignal (170), welches einer direkten Übertragung des ersten Ultraschallsignals (130) von dem ersten Ultraschallsender (100) an den ersten Ultraschallempfänger (20) entspricht, und/oder
- weitere Empfangssignale (250a), welche einer indirekten Übertragung des ersten Ultraschallsignals (130) von dem ersten Ultraschallsender (100) an den ersten Ultraschallempfänger (20) entsprechen, umfasst und
- Ermitteln (560) eines ersten Direktempfangssignals (130) und/oder weiterer Empfangssignale (250a) innerhalb der ersten Ultraschallsignalfolge (21, 22, 23), und
- Vergleichen (570) der ersten empfangenen Ultraschallsignalfolge (21, 22, 23) mit einer ersten Referenz-Ultraschallsignalfolge, und
- Erkennen (590) wenigstens eines Objekts(65, 66) im Bereich zwischen der Primärspule (190) und der Sekundärspule (180) in Abhängigkeit des Vergleichs zwischen der ersten Ultraschallsignalfolge (21, 22, 23) und der Referenz-Ultraschallsignalfolge.

2. Verfahren nach Anspruch 1, wobei die erste Referenz-Ultraschallsignalfolge einer Ultraschallsignalfolge entspricht, bei der kein Objekt (65, 66) im Bereich zwischen der Primärspule (190) und der Sekundärspule (180) erkannt wird.

3. Verfahren nach Anspruch 2, **dadurch gekennzeichnet, dass** ein Objekt (65, 66) im Bereich zwischen der Primärspule (190) und der Sekundärspule (180) erkannt wird, falls sich die erste Ultraschallsignalfolge (21, 22, 23) und die erste Referenz-Ultraschallsignalfolge um das erste Direktempfangssignal (170) und/oder ein erstes, ermitteltes Empfangssignal (28) unterscheiden, wobei das erste Empfangssignal (28) einer indirekten Übertragung des ersten Ultraschallsignals (130) von dem ersten Ultraschallsender (100) an den ersten Ultraschallempfänger (20) und einer Reflexion des ersten Ultraschallsignals (130) an dem Objekt (65, 66) entspricht.

4. Verfahren nach einem der Ansprüche 1 bis 3, **dadurch gekennzeichnet, dass**
- ein erstes Empfangssignal (28), welches einer indirekten Übertragung des ersten Ultraschallsignals (130) von dem ersten Ultraschallsender (100) an den ersten Ultraschallempfänger (20) und einer Reflektion des ersten Ultraschallsignals (130) an dem Objekt (65, 66) entspricht, in Abhängigkeit einer Überschreitung eines ersten Schwellenwertes (240a) durch eine Amplitude des ersten Empfangssignals (28), und
- dass das erste Direktempfangssignal (170) in Abhängigkeit einer Überschreitung eines zweiten Schwellenwertes (245a) durch eine Amplitude des ersten Direktempfangssignals (28)
ermittelt (530) wird, wobei der zweite Schwellenwert (245a) größer ist als der erste Schwellenwert (240a).

5. Verfahren nach Anspruch 1, **dadurch gekennzeichnet, dass** das Verfahren die zusätzlichen Verfahrensschritte umfasst:
- Empfangen (520) einer zweiten Ultraschallsignalfolge mittels eines zweiten an dem Fahrzeug (10) angeordneten Ultraschallempfängers (30), wobei die zweite Ultraschallsignalfolge (31, 32, 33)
- wenigstens ein zweites Direktempfangssignal (140), welches einer direkten Übertragung des ersten Ultraschallsignals (130) von dem ersten Ultraschallsender (100) an den zweiten Ultraschallempfänger (30) entspricht, und/oder
- weitere Empfangssignale (250b), welche einer indirekten Übertragung des ersten Ultraschallsignals (130) von dem ersten Ultraschallsender (100) an den zweiten Ultraschallempfänger (20) entsprechen, umfasst,
- Ermitteln (650) eines zweiten Direktempfangssignals (140) und/oder weiterer Empfangssignale (250b) innerhalb der zweiten Ultraschallsignalfolge (31, 32, 33), und
- Vergleichen (570) der ersten empfangenen Ultraschallsignalfolge (21, 22, 23) mit der zweiten empfangenen Ultraschallsignalfolge (31, 32, 33) als Referenz-Ultraschallsignalfolge, und
- Erkennen (590) wenigstens ein Objekts (65, 66) im Bereich zwischen der Primärspule (190) und der Sekundärspule (180) der induktiven Ladeeinrichtung, falls
- die erste Ultraschallsignalfolge (21, 22, 23) kein erstes Direktempfangssignal (170) enthält, und/oder
- die zweite Ultraschallsignalfolge (31, 32, 33) kein zweites Direktempfangssignal (140) enthält, und/oder
- die erste Ultraschallsignalfolge (21, 22, 23) ein erstes Empfangssignal (28) enthält, welches einer indirekten Übertragung des ersten Ultraschallsignals (130) von dem ersten Ultraschallsender (100) an den ersten Ultraschallempfänger (20) und einer Reflektion des ersten Ultraschallsignals (130) an dem Objekt (65, 66) entspricht, und/oder
- die zweite Ultraschallsignalfolge (31, 32, 33) ein zweites Empfangssignal (29) enthält, welches einer indirekten Übertragung des ersten Ultraschallsignals (130) von dem ersten Ultraschallsender (100) an den zweiten Ultraschallempfänger (30) und einer Reflektion des ersten Ultraschallsignals (130) an dem Objekt (65, 66) entspricht.

6. Verfahren nach Anspruch 5, **dadurch gekennzeichnet, dass**
- das erste Empfangssignal (28), welches einer indirekten Übertragung des ersten Ultraschallsignals (130) von dem ersten Ultraschallsender (100) an den ersten Ultraschallempfänger (20) und einer Reflektion des ersten Ultraschallsignals (130) an dem Objekt (65, 66) entspricht, in Abhängigkeit einer Überschreitung eines ersten Schwellenwertes (240a) durch eine Amplitude des ersten Empfangssignals (28) ermittelt wird, und
- dass das zweite Empfangssignal (29), welches einer indirekten Übertragung des ersten Ultraschallsignals (130) von dem ersten Ultraschallsender (100) an den zweiten Ultraschallempfänger (30) und einer Reflektion des ersten Ultraschallsignals (130) an dem Objekt (65, 66) entspricht, in Abhängigkeit einer Überschreitung eines dritten Schwellenwertes (240b) durch eine Amplitude des zweiten Empfangssignals, und
- dass das erste Direktempfangssignal (170) in Abhängigkeit einer Überschreitung eines zweiten Schwellenwertes (245a) durch eine Amplitude des ersten Direktempfangssignals (170), und
- dass das zweite Direktempfangssignal (140) in Abhängigkeit einer Überschreitung eines vierten Schwellenwertes (245b) durch eine Amplitude des zweiten Direktempfangssignals (140)
ermittelt wird, wobei der zweite Schwellenwert (245a) größer ist als der erste Schwellenwert (240a) und der dritte Schwellenwert (245b) größer ist als der vierte Schwellenwert (240b).

7. Verfahren nach einem der Ansprüche 1 bis 6, **dadurch gekennzeichnet, dass**
- jede Ultraschallsignalfolge (21, 22, 23, 31, 32, 33, 41, 42, 43, 51, 52, 53) in einem zugehörigen zeitlich festgelegten Messfenster (265) empfangen wird, wobei die Messfenster (265) der jeweiligen Ultraschallempfänger (20, 30, 40, 50) zueinander synchronisiert sind.

8. Vorrichtung zum Erkennen (590) wenigstens eines Objekts (65, 66) im Bereich zwischen einer Primärspule (190) und einer Sekundärspule (180) einer induktiven Ladeeinrichtung für ein Fahrzeug (10) und zur Ausführung eines Verfahrens nach einem der Ansprüche 1 bis 7, wobei die Vorrichtung
- einen ersten an der Primärspule (190) der induktiven Ladeeinrichtung angeordneten Ultraschallsender (100), der dazu ausgebildet ist, wenigstens ein erstes Ultraschallsignal (130) auszusenden, und
- einen ersten an dem Fahrzeug (10) angeordneten Ultraschallempfänger (20), der dazu ausgebildet ist, wenigstens eine erste Ultraschallsignalfolge (21, 22, 23) zu empfangen, wobei die erste Ultraschallsignalfolge (21)
- wenigstens ein erstes Direktempfangssignal (170), welches einer direkten Übertragung des ersten Ultraschallsignals (130) von dem ersten Ultraschallsender (100) an den ersten Ultraschallempfänger (20) entspricht, und/oder
- weitere Empfangssignale (250a), welche einer indirekten Übertragung des ersten Ultraschallsignals (130) von dem ersten Ultraschallsender (100) an den ersten Ultraschallempfänger (20) entsprechen, umfasst und
- wenigstens eine Recheneinheit (15)
umfasst,
wobei die Recheneinheit (15) dazu ausgebildet ist,
- innerhalb der ersten Ultraschallsignalfolge (21, 22, 23) das erste Direktempfangssignal (170) und/oder die weiteren Empfangssignale (250a) zu ermitteln, und
- die erste empfangene Ultraschallsignalfolge (21, 22, 23) mit einer ersten Referenz-Ultraschallsignalfolge zu vergleichen, und
- in Abhängigkeit des Vergleichs zwischen der ersten Ultraschallsignalfolge (21, 22, 23) und der Referenz-Ultraschallsignalfolge wenigstens ein Objekt (65, 66) im Bereich zwischen der Primärspule (190) und der Sekundärspule (180) zu erkennen.

9. Vorrichtung nach Anspruch 8, **dadurch gekennzeichnet, dass** die Vorrichtung zusätzlich umfasst
- einen zweiten an dem Fahrzeug (10) angeordneten Ultraschallempfänger (30), der dazu ausgebildet ist, wenigstens eine zweite Ultraschallsignalfolge (31, 32, 33) zu empfangen, wobei die zweite Ultraschallsignalfolge (31, 32, 33)
- wenigstens ein zweites Direktempfangssignal (140), welches einer direkten Übertragung des ersten Ultraschallsignals (130) von dem ersten Ultraschallsender (100) an den zweiten Ultraschallempfänger (30) entspricht, und/oder
- weitere Empfangssignale (250b), welche einer indirekten Übertragung des ersten Ultraschallsignals (130)von dem ersten Ultraschallsender (100) an den zweiten Ultraschallempfänger (30) entsprechen, und
- einen dritten und vierten an dem Fahrzeug (10) angeordneten Ultraschallempfänger (40, 50),
wobei der dritte und vierte Ultraschallempfänger (40, 50) derart angeordnet sind, dass der dritte Ultraschallempfänger (40) eine dritte Ultraschallsignalfolge (41, 42, 43) empfängt, wobei die dritte Ultraschallsignalfolge (41, 42, 43) nur umfasst
- weitere Empfangssignale (250c), welche einer indirekten Übertragung des ersten Ultraschallsignals (130) von dem ersten Ultraschallsender (100) an den dritten Ultraschallempfänger (40) entsprechen, und
und der vierte Ultraschallempfänger (50) eine vierte Ultraschallsignalfolge (250d) empfängt, wobei die vierte Ultraschallsignalfolge (51, 52, 53) nur umfasst
- weitere Empfangssignale (250d), welche einer indirekten Übertragung des ersten Ultraschallsignals (130) von dem ersten Ultraschallsender (100) an den vierten Ultraschallempfänger (50)entsprechen,
wobei die Recheneinheit (15) zusätzlich dazu ausgebildet ist,
- innerhalb der zweiten Ultraschallsignalfolge (31, 32, 33) das zweite Direktempfangssignal (140) und/oder weitere Empfangssignale (250b) zu ermitteln, und
- innerhalb der dritten Ultraschallsignalfolge (41, 42, 43) die weiteren Empfangssignale (250c) zu ermitteln, und
- innerhalb der vierten Ultraschallsignalfolge (51, 52, 53) die weiteren Empfangssignale (250d) zu ermitteln, und
- die erste empfangene Ultraschallsignalfolge (21, 22, 23) mit der zweiten und/oder dritten und/oder vierten empfangenen Ultraschallsignalfolge (31, 32, 33, 41, 42, 43, 51, 52, 53) zu vergleichen, und
ein Objekt (65, 66) im Bereich zwischen der Primärspule (190) und der Sekundärspule (180) der induktiven Ladeeinrichtung zu erkennen, falls
- die erste und/oder zweite Ultraschallsignalfolge (21, 22, 23, 31, 32, 33) kein erstes Direktempfangssignal (170) enthalten, und/oder
- die erste Ultraschallsignalfolge (21, 22, 23) ein erstes Empfangssignal (28) enthält, welches einer indirekten Übertragung des ersten Ultraschallsignals (130) von dem ersten Ultraschallsender (100) an den ersten Ultraschallempfänger (20) und einer Reflektion des ersten Ultraschallsignals (130) an dem Objekt (65, 66) entspricht, und/oder
- die zweite Ultraschallsignalfolge (31, 32, 33) ein zweites Empfangssignal (29) enthält, welches einer indirekten Übertragung des ersten Ultraschallsignals (130) von dem ersten Ultraschallsender (100) an den zweiten Ultraschallempfänger (30) und einer Reflektion des ersten Ultraschallsignals (130) an dem Objekt (65, 66) entspricht und/oder
- die dritte Ultraschallsignalfolge (41, 42, 43) ein drittes Empfangssignal (26) enthält, welches einer indirekten Übertragung des ersten Ultraschallsignals (130) von dem ersten Ultraschallsender (100) an den dritten Ultraschallempfänger (40) und einer Reflektion des ersten Ultraschallsignals (130) an dem Objekt (65, 66) entspricht und/oder
- die vierte Ultraschallsignalfolge (51, 52, 53) ein viertes Empfangssignal (27) enthält, welches einer indirekten Übertragung des ersten Ultraschallsignals (130) von dem ersten Ultraschallsender (100) an den vierten Ultraschallempfänger (50) und einer Reflektion des ersten Ultraschallsignals (130) an dem Objekt (65, 66) entspricht.

10. Vorrichtung nach Anspruch 9, **dadurch gekennzeichnet, dass** die Vorrichtung zusätzlich einen zweiten an der Primärspule (190) der induktiven Ladeeinrichtung angeordneten Ultraschallsender (110) zum Aussenden wenigstens eines zweiten Ultraschallsignals (131) umfasst, wobei der erste und zweite Ultraschallsender (100, 110) so angeordnet sind, dass das erste Ultraschallsignal (130) in Richtung des zweiten Ultraschallsenders (110) und das zweite Ultraschallsignal (131) in Richtung des ersten Ultraschallsenders (100) ausgesendet wird, wobei der dritte und vierte Ultraschallempfänger (40, 50) dazu eingerichtet sind, ein drittes und viertes Direktempfangssignal (150, 160), welches einer direkten Übertragung des zweiten Ultraschallsignals (131) von dem zweiten Ultraschallsender (110) an den dritten und vierten Ultraschallempfänger (40, 50) entspricht, zu empfangen.

11. Vorrichtung nach Anspruch 10, **dadurch gekennzeichnet, dass** der erste und zweite Ultraschallsender (100, 110) dazu ausgebildet sind, das erste und zweite Ultraschallsignal (130, 131) abwechselnd auszusenden und das erste und zweite Ultraschallsignal (130, 131) zu codieren.

12. Vorrichtung nach einem der Ansprüche 9 bis 11, **dadurch gekennzeichnet, dass** der erste, zweite, dritte und vierte Ultraschallempfänger (20, 30, 40, 50) so angeordnet sind, dass sich eine an dem Fahrzeug (10) angeordnete Sekundärspule (180) der induktiven Ladeeinrichtung zentrisch innerhalb der Anordnung der Ultraschallempfänger (20, 30, 40, 50) befindet.

13. Vorrichtung nach einem der Ansprüche 8 bis 12, **dadurch gekennzeichnet, dass** jeder der Ultraschallsender (100, 110) dazu ausgebildet ist, wiederholt ein erstes und/oder zweites Ultraschallsignal auszusenden und jeder Ultraschallempfänger (20, 30, 40, 50) dazu ausgebildet ist, mindestens eine weitere folgende Ultraschallsignalfolge zu empfangen, wobei die Recheneinheit (15) dazu ausgebildet ist, wenigstens ein Objekt (65, 66) im Bereich zwischen einer Primärspule (190) und einer Sekundärspule (180) einer induktiven Ladeeinrichtung in Abhängigkeit eines Vergleichs von aufeinander folgenden Ultraschallsignalfolgen mit den zugehörigen Referenz-Ultraschallsignalfolgen zu erkennen.

## Claims

1. Method for detecting (590) at least one object (65, 66) in the area between a primary coil (190) and a secondary coil (180) of an inductive charging device for a vehicle (10), wherein the method comprises the method steps of:
- transmitting (500) a first ultrasonic signal (130) by means of a first ultrasonic transmitter (100) arranged on the primary coil (190) of the inductive charging device, and
- receiving (510) a first ultrasonic signal sequence (21, 22, 23) by means of a first ultrasonic receiver (20) arranged on the vehicle (10), the first ultrasonic signal sequence (21, 22, 23) comprising
- at least one first direct received signal (170) corresponding to a direct transmission of the first ultrasonic signal (130) from the first ultrasonic transmitter (100) to the first ultrasonic receiver (20), and/or
- further received signals (250a) corresponding to an indirect transmission of the first ultrasonic signal (130) from the first ultrasonic transmitter (100) to the first ultrasonic receiver (20), and
- ascertaining (560) a first direct received signal (130) and/or further received signals (250a) within the first ultrasonic signal sequence (21, 22, 23), and
- comparing (570) the first received ultrasonic signal sequence (21, 22, 23) with a first reference ultrasonic signal sequence, and
- detecting (590) at least one object (65, 66) in the area between the primary coil (190) and the secondary coil (180) on the basis of the comparison between the first ultrasonic signal sequence (21, 22, 23) and the reference ultrasonic signal sequence.

2. Method according to Claim 1, wherein the first reference ultrasonic signal sequence corresponds to an ultrasonic signal sequence for which no object (65, 66) is detected in the area between the primary coil (190) and the secondary coil (180).

3. Method according to Claim 2, **characterized in that** an object (65, 66) is detected in the area between the primary coil (190) and the secondary coil (180) if the first ultrasonic signal sequence (21, 22, 23) and the first reference ultrasonic signal sequence differ by the first direct received signal (170) and/or a first, ascertained received signal (28), the first received signal (28) corresponding to an indirect transmission of the first ultrasonic signal (130) from the first ultrasonic transmitter (100) to the first ultrasonic receiver (20) and/or to a reflection of the first ultrasonic signal (130) from the object (65, 66).

4. Method according to one of Claims 1 to 3, **characterized in that**
- a first received signal (28) corresponding to an indirect transmission of the first ultrasonic signal (130) from the first ultrasonic transmitter (100) to the first ultrasonic receiver (20) and to a reflection of the first ultrasonic signal (130) from the object (65, 66) is ascertained (530) on the basis of a first threshold value (240a) being exceeded by an amplitude of the first received signal (28), and
- **in that** the first direct received signal (170) is ascertained (530) on the basis of a second threshold value (245a) being exceeded by an amplitude of the first direct received signal (28),
the second threshold value (245a) being greater than the first threshold value (240a).

5. Method according to Claim 1, **characterized in that** the method comprises the additional method steps of:
- receiving (520) a second ultrasonic signal sequence by means of a second ultrasonic receiver (30) arranged on the vehicle (10), the second ultrasonic signal sequence (31, 32, 33) comprising
- at least one second direct received signal (140) corresponding to a direct transmission of the first ultrasonic signal (130) from the first ultrasonic transmitter (100) to the second ultrasonic receiver (30), and/or
- further received signals (250b) corresponding to an indirect transmission of the first ultrasonic signal (130) from the first ultrasonic transmitter (100) to the second ultrasonic receiver (20),
- ascertaining (650) a second direct received signal (140) and/or further received signals (250b) within the second ultrasonic signal sequence (31, 32, 33), and
- comparing (570) the first received ultrasonic signal sequence (21, 22, 23) with the second received ultrasonic signal sequence (31, 32, 33) as reference ultrasonic signal sequence, and
- detecting (590) at least one object (65, 66) in the area between the primary coil (190) and the secondary coil (180) of the inductive charging device if
- the first ultrasonic signal sequence (21, 22, 23) does not contain a first direct received signal (170), and/or
- the second ultrasonic signal sequence (31, 32, 33) does not contain a second direct received signal (140), and/or
- the first ultrasonic signal sequence (21, 22, 23) contains a first received signal (28) corresponding to an indirect transmission of the first ultrasonic signal (130) from the first ultrasonic transmitter (100) to the first ultrasonic receiver (20) and to a reflection of the first ultrasonic signal (130) from the object (65, 66), and/or
- the second ultrasonic signal sequence (31, 32, 33) contains a second received signal (29) corresponding to an indirect transmission of the first ultrasonic signal (130) from the first ultrasonic transmitter (100) to the second ultrasonic receiver (30) and to a reflection of the first ultrasonic signal (130) from the object (65, 66).

6. Method according to Claim 5, **characterized in that**
- the first received signal (28) corresponding to an indirect transmission of the first ultrasonic signal (130) from the first ultrasonic transmitter (100) to the first ultrasonic receiver (20) and to a reflection of the first ultrasonic signal (130) from the object (65, 66) is ascertained on the basis of a first threshold value (240a) being exceeded by an amplitude of the first received signal (28), and
- the second received signal (29) corresponding to an indirect transmission of the first ultrasonic signal (130) from the first ultrasonic transmitter (100) to the second ultrasonic receiver (30) and to a reflection of the first ultrasonic signal (130) from the object (65, 66) is ascertained on the basis of a third threshold value (240b) being exceeded by an amplitude of the second received signal, and
- the first direct received signal (170) is ascertained on the basis of a second threshold value (245a) being exceeded by an amplitude of the first direct received signal (170), and
- the second direct received signal (140) is ascertained on the basis of a fourth threshold value (245b) being exceeded by an amplitude of the second direct received signal (140),
the second threshold value (245a) being greater than the first threshold value (240a) and the third threshold value (245b) being greater than the fourth threshold value (240b).

7. Method according to one of Claims 1 to 6, **characterized in that**
- each ultrasonic signal sequence (21, 22, 23, 31, 32, 33, 41, 42, 43, 51, 52, 53) is received in a related temporally defined measurement window (265),
the measurement windows (265) of the respective ultrasonic receivers (20, 30, 40, 50) being in sync with one another.

8. Apparatus for detecting (590) at least one object (65, 66) in the area between a primary coil (190) and a secondary coil (180) of an inductive charging device for a vehicle (10) and for carrying out a method according to one of Claims 1 to 7, wherein the apparatus comprises
- a first ultrasonic transmitter (100), arranged on the primary coil (190) of the inductive charging device, that is designed to transmit at least one first ultrasonic signal (130), and
- a first ultrasonic receiver (20), arranged on the vehicle (10), that is designed to receive at least one first ultrasonic signal sequence (21, 22, 23), the first ultrasonic signal sequence (21) comprising
- at least one first direct received signal (170) corresponding to a direct transmission of the first ultrasonic signal (130) from the first ultrasonic transmitter (100) to the first ultrasonic receiver (20), and/or
- further received signals (250a) corresponding to an indirect transmission of the first ultrasonic signal (130) from the first ultrasonic transmitter (100) to the first ultrasonic receiver (20), and
- at least one computing unit (15),
wherein the computing unit (15) is designed
- to ascertain the first direct received signal (170) and/or the further received signals (250a) within the first ultrasonic signal sequence (21, 22, 23), and
- to compare the first received ultrasonic signal sequence (21, 22, 23) with a first reference ultrasonic signal sequence, and
- to take the comparison between the first ultrasonic signal sequence (21, 22, 23) and the reference ultrasonic signal sequence as a basis for detecting at least one object (65, 66) in the area between the primary coil (190) and the secondary coil (180).

9. Apparatus according to Claim 8, **characterized in that** the apparatus additionally comprises
- a second ultrasonic receiver (30), arranged on the vehicle (10), that is designed to receive at least one second ultrasonic signal sequence (31, 32, 33), the second ultrasonic signal sequence (31, 32, 33)
- at least one second direct received signal (140) corresponding to a direct transmission of the first ultrasonic signal (130) from the first ultrasonic transmitter (100) to the second ultrasonic receiver (30), and/or
- further received signals (250b) corresponding to an indirect transmission of the first ultrasonic signal (130) from the first ultrasonic transmitter (100) to the second ultrasonic receiver (30), and
- a third and a fourth ultrasonic receiver (40, 50) arranged on the vehicle (10),
wherein the third and fourth ultrasonic receivers (40, 50) are arranged in such a way that the third ultrasonic receiver (40) receives a third ultrasonic signal sequence (41, 42, 43), the third ultrasonic signal sequence (41, 42, 43) comprising only
- further received signals (250c) corresponding to an indirect transmission of the first ultrasonic signal (130) from the first ultrasonic transmitter (100) to the third ultrasonic receiver (40), and
and the fourth ultrasonic receiver (50) receives a fourth ultrasonic signal sequence (250d), the fourth ultrasonic signal sequence (51, 52, 53) comprising only
- further received signals (250d) corresponding to an indirect transmission of the first ultrasonic signal (130) from the first ultrasonic transmitter (100) to the fourth ultrasonic receiver (50),
wherein the computing unit (15) is additionally designed
- to ascertain the second direct received signal (140) and/or further received signals (250b) within the second ultrasonic signal sequence (31, 32, 33), and
- to ascertain the further received signals (250c) within the third ultrasonic signal sequence (41, 42, 43), and
- to ascertain the further received signals (250d) within the fourth ultrasonic signal sequence (51, 52, 53), and
- to compare the first received ultrasonic signal sequence (21, 22, 23) with the second and/or third and/or fourth received ultrasonic signal sequence (31, 32, 33, 41, 42, 43, 51, 52, 53), and
to detect an object (65, 66) in the area between the primary coil (190) and the secondary coil (180) of the inductive charging device if
- the first and/or second ultrasonic signal sequences (21, 22, 23, 31, 32, 33) do not contain a first direct received signal (170), and/or
- the first ultrasonic signal sequence (21, 22, 23) contains a first received signal (28) corresponding to an indirect transmission of the first ultrasonic signal (130) from the first ultrasonic transmitter (100) to the first ultrasonic receiver (20) and to a reflection of the first ultrasonic signal (130) from the object (65, 66), and/or
- the second ultrasonic signal sequence (31, 32, 33) contains a second received signal (29) corresponding to an indirect transmission of the first ultrasonic signal (130) from the first ultrasonic transmitter (100) to the second ultrasonic receiver (30) and to a reflection of the first ultrasonic signal (130) from the object (65, 66), and/or
- the third ultrasonic signal sequence (41, 42, 43) contains a third received signal (26) corresponding to an indirect transmission of the first ultrasonic signal (130) from the first ultrasonic transmitter (100) to the third ultrasonic receiver (40) and to a reflection of the first ultrasonic signal (130) from the object (65, 66), and/or
- the fourth ultrasonic signal sequence (51, 52, 53) contains a fourth received signal (27) corresponding to an indirect transmission of the first ultrasonic signal (130) from the first ultrasonic transmitter (100) to the fourth ultrasonic receiver (50) and to a reflection of the first ultrasonic signal (130) from the object (65, 66).

10. Apparatus according to Claim 9, **characterized in that**
the apparatus additionally comprises a second ultrasonic transmitter (110), arranged on the primary coil (190) of the inductive charging device, for transmitting at least one second ultrasonic signal (131), wherein the first and second ultrasonic transmitters (100, 110) are arranged in such a way that the first ultrasonic signal (130) is transmitted in the direction of the second ultrasonic transmitter (110) and the second ultrasonic signal (131) is transmitted in the direction of the first ultrasonic transmitter (100), wherein the third and fourth ultrasonic receivers (40, 50) are configured to receive a third and a fourth direct received signal (150, 160) corresponding to a direct transmission of the second ultrasonic signal (131) from the second ultrasonic transmitter (110) to the third and fourth ultrasonic receivers (40, 50).

11. Apparatus according to Claim 10, **characterized in that** the first and second ultrasonic transmitters (100, 110) are designed to transmit the first and second ultrasonic signals (130, 131) alternately and to encode the first and second ultrasonic signals (130, 131).

12. Apparatus according to one of Claims 9 to 11, **characterized in that** the first, second, third and fourth ultrasonic receivers (20, 30, 40, 50) are arranged in such a way that a secondary coil (180) of the inductive charging device, which secondary coil is arranged on the vehicle (10), is situated centrally within the arrangement of the ultrasonic receivers (20, 30, 40, 50) .

13. Apparatus according to one of Claims 8 to 12, **characterized in that** each of the ultrasonic transmitters (100, 110) is designed to repeatedly transmit a first and/or second ultrasonic signal and each ultrasonic receiver (20, 30, 40, 50) is designed to receive at least one further following ultrasonic signal sequence, wherein the computing unit (15) is designed to detect at least one object (65, 66) in the area between a primary coil (190) and a secondary coil (180) of an inductive charging device on the basis of a comparison of successive ultrasonic signal sequences with the related reference ultrasonic signal sequences.

## Revendications

1. Procédé servant à identifier (590) au moins un objet (65, 66) dans la zone entre une bobine primaire (190) et une bobine secondaire (180) d'un système de charge inductif pour un véhicule (10), le procédé comprenant les étapes de procédé consistant à :
- émettre (500) un premier signal ultrasonore (130) au moyen d'un premier émetteur d'ultrasons (100) disposé au niveau de la bobine primaire (190) du système de charge inductif, et
- recevoir (510) une première séquence de signaux ultrasonores (21, 22, 23) au moyen d'un premier récepteur d'ultrasons (20) disposé au niveau du véhicule (10), la première séquence de signaux ultrasonores (21, 22, 23) comprenant
- au moins un premier signal de réception directe (170) qui correspond à une transmission directe du premier signal ultrasonore (130) du premier émetteur d'ultrasons (100) au premier récepteur d'ultrasons (20), et/ou
- d'autres signaux de réception (250a) qui correspondent à une transmission indirecte du premier signal ultrasonore (130) du premier émetteur d'ultrasons (100) au premier récepteur d'ultrasons (20), et
- déterminer (560) un premier signal de réception directe (130) et/ou d'autres signaux de réception (250a) à l'intérieur de la première séquence de signaux ultrasonores (21, 22, 23), et
- comparer (570) la première séquence de signaux ultrasonores (21, 22, 23) reçue avec une première séquence de signaux ultrasonores de référence, et
- identifier (590) au moins un objet (65, 66) dans la zone entre la bobine primaire (190) et la bobine secondaire (180) en fonction de la comparaison entre la première séquence de signaux ultrasonores (21, 22, 23) et la séquence de signaux ultrasonores de référence.

2. Procédé selon la revendication 1, dans lequel la première séquence de signaux ultrasonores de référence correspond à une séquence de signaux ultrasonores dans laquelle aucun objet (65, 66) n'est identifié dans la zone entre la bobine primaire (190) et la bobine secondaire (180).

3. Procédé selon la revendication 2, **caractérisé en ce qu'**un objet (65, 66) est identifié dans la zone entre la bobine primaire (190) et la bobine secondaire (180) si la première séquence de signaux ultrasonores (21, 22, 23) et la première séquence de signaux ultrasonores de référence se distinguent par le premier signal de réception directe (170) et/ou par un premier signal de réception déterminé (28), le premier signal de réception (28) correspondant à une transmission indirecte du premier signal ultrasonore (130) du premier émetteur d'ultrasons (100) au premier récepteur d'ultrasons (20) et à une réflexion du premier signal ultrasonore (130) sur l'objet (65, 66).

4. Procédé selon l'une quelconque des revendications 1 à 3, **caractérisé en ce que**
- un premier signal de réception (28) qui correspond à une transmission indirecte du premier signal ultrasonore (130) du premier émetteur d'ultrasons (100) au premier récepteur d'ultrasons (20) et à une réflexion du premier signal ultrasonore (130) sur l'objet (65, 66) est déterminé (530) en fonction d'un dépassement d'une première valeur seuil (240a) par une amplitude du premier signal de réception (28), et
- **en ce que** le premier signal de réception directe (170) est déterminé (530) en fonction d'un dépassement d'une deuxième valeur seuil (245a) par une amplitude du premier signal de réception directe (28), la deuxième valeur seuil (245a) étant supérieure à la première valeur seuil (240a).

5. Procédé selon la revendication 1, **caractérisé en ce que** le procédé comprend les étapes de procédé supplémentaires consistant à :
- recevoir (520) une deuxième séquence de signaux ultrasonores au moyen d'un deuxième récepteur d'ultrasons (30) disposé au niveau du véhicule (10), la deuxième séquence de signaux ultrasonores (31, 32, 33) comprenant
- au moins un deuxième signal de réception directe (140) qui correspond à une transmission directe du premier signal ultrasonore (130) du premier émetteur d'ultrasons (100) au deuxième récepteur d'ultrasons (30), et/ou
- d'autres signaux de réception (250b) qui correspondent à une transmission indirecte du premier signal ultrasonore (130) du premier émetteur d'ultrasons (100) au deuxième récepteur d'ultrasons (20),
- déterminer (650) un deuxième signal de réception directe (140) et/ou d'autres signaux de réception (250b) à l'intérieur de la deuxième séquence de signaux ultrasonores (31, 32, 33), et
- comparer (570) la première séquence de signaux ultrasonores (21, 22, 23) reçue avec la deuxième séquence de signaux ultrasonores (31, 32, 33) reçue comme séquence de signaux ultrasonores de référence, et
- identifier (590) au moins un objet (65, 66) dans la zone entre la bobine primaire (190) et la bobine secondaire (180) du système de charge inductif, si
- la première séquence de signaux ultrasonores (21, 22, 23) ne contient aucun premier signal de réception directe (170), et/ou
- la deuxième séquence de signaux ultrasonores (31, 32, 33) ne contient aucun deuxième signal de réception directe (140), et/ou
- la première séquence de signaux ultrasonores (21, 22, 23) contient un premier signal de réception (28) qui correspond à une transmission indirecte du premier signal ultrasonore (130) du premier émetteur d'ultrasons (100) au premier récepteur d'ultrasons (20) et à une réflexion du premier signal ultrasonore (130) sur l'objet (65, 66), et/ou
- la deuxième séquence de signaux ultrasonores (31, 32, 33) contient un deuxième signal de réception (29) qui correspond à une transmission indirecte du premier signal ultrasonore (130) du premier émetteur d'ultrasons (100) au deuxième récepteur d'ultrasons (30) et à une réflexion du premier signal ultrasonore (130) sur l'objet (65, 66).

6. Procédé selon la revendication 5, **caractérisé en ce que**
- le premier signal de réception (28) qui correspond à une transmission indirecte du premier signal ultrasonore (130) du premier émetteur d'ultrasons (100) au premier récepteur d'ultrasons (20) et à une réflexion du premier signal ultrasonore (130) sur l'objet (65, 66) est déterminé en fonction d'un dépassement d'une première valeur seuil (240a) par une amplitude du premier signal de réception (28), et
- **en ce que** le deuxième signal de réception (29) qui correspond à une transmission indirecte du premier signal ultrasonore (130) du premier émetteur d'ultrasons (100) au deuxième récepteur d'ultrasons (30) et à une réflexion du premier signal ultrasonore (130) sur l'objet (65, 66) est déterminé en fonction d'un dépassement d'une troisième valeur seuil (240b) par une amplitude du deuxième signal de réception, et
- **en ce que** le premier signal de réception directe (170) est déterminé en fonction d'un dépassement d'une deuxième valeur seuil (245a) par une amplitude du premier signal de réception directe (170), et
- **en ce que** le deuxième signal de réception directe (140) est déterminé en fonction d'un dépassement d'une quatrième valeur seuil (245b) par une amplitude du deuxième signal de réception directe (140),
la deuxième valeur seuil (245a) étant supérieure à la première valeur seuil (240a) et la troisième valeur seuil (245b) étant supérieure à la quatrième valeur seuil (240b).

7. Procédé selon l'une quelconque des revendications 1 à 6, **caractérisé en ce que**
- chaque séquence de signaux ultrasonores (21, 22, 23, 31, 32, 33, 41, 42, 43, 51, 52, 53) est reçue dans une fenêtre de mesure (265) associée, définie dans le temps,
les fenêtres de mesure (265) des récepteurs d'ultrasons (20, 30, 40, 50) respectifs étant synchronisées les unes avec les autres.

8. Dispositif servant à identifier (590) au moins un objet (65, 66) dans la zone entre une bobine primaire (190) et une bobine secondaire (180) d'un système de charge inductif pour un véhicule (10) et à exécuter un procédé selon l'une quelconque des revendications 1 à 7, le dispositif comprenant
- un premier émetteur d'ultrasons (100) disposé au niveau de la bobine primaire (190) du système de charge inductif et qui est réalisé pour émettre au moins un premier signal ultrasonore (130), et
- un premier récepteur d'ultrasons (20) disposé au niveau du véhicule (10) et qui est réalisé pour recevoir au moins une première séquence de signaux ultrasonores (21, 22, 23), la première séquence de signaux ultrasonores (21) comprenant
- au moins un premier signal de réception directe (170) qui correspond à une transmission directe du premier signal ultrasonore (130) du premier émetteur d'ultrasons (100) au premier récepteur d'ultrasons (20), et/ou
- d'autres signaux de réception (250a) qui correspondent à une transmission indirecte du premier signal ultrasonore (130) du premier émetteur d'ultrasons (100) au premier récepteur d'ultrasons (20), et
- au moins une unité de calcul (15),
l'unité de calcul (15) étant réalisée pour
- déterminer à l'intérieur de la première séquence de signaux ultrasonores (21, 22, 23) le premier signal de réception directe (170) et/ou les autres signaux de réception (250a), et
- comparer la première séquence de signaux ultrasonores (21, 22, 23) reçue avec une première séquence de signaux ultrasonores de référence, et
- en fonction de la comparaison entre la première séquence de signaux ultrasonores (21, 22, 23) et la séquence de signaux ultrasonores de référence, identifier au moins un objet (65, 66) dans la zone entre la bobine primaire (190) et la bobine secondaire (180) .

9. Dispositif selon la revendication 8, **caractérisé en ce que** le dispositif comprend en outre
- un deuxième récepteur d'ultrasons (30) disposé au niveau du véhicule (10) et qui est réalisé pour recevoir au moins une deuxième séquence de signaux ultrasonores (31, 32, 33), la deuxième séquence de signaux ultrasonores (31, 32, 33)
- au moins un deuxième signal de réception directe (140) qui correspond à une transmission directe du premier signal ultrasonore (130) du premier émetteur d'ultrasons (100) au deuxième récepteur d'ultrasons (30), et/ou
- d'autres signaux de réception (250b) qui correspondent à une transmission indirecte du premier signal ultrasonore (130) du premier émetteur d'ultrasons (100) au deuxième récepteur d'ultrasons (30), et
- un troisième et un quatrième récepteur d'ultrasons (40, 50) disposés au niveau du véhicule (10),
le troisième et le quatrième récepteur d'ultrasons (40, 50) étant disposés de telle sorte que le troisième récepteur d'ultrasons (40) reçoit une troisième séquence de signaux ultrasonores (41, 42, 43), la troisième séquence de signaux ultrasonores (41, 42, 43) ne comprenant que
- d'autres signaux de réception (250c) qui correspondent à une transmission indirecte du premier signal ultrasonore (130) du premier émetteur d'ultrasons (100) au troisième récepteur d'ultrasons (40), et
et le quatrième récepteur d'ultrasons (50) recevant une quatrième séquence de signaux ultrasonores (250d), la quatrième séquence de signaux ultrasonores (51, 52, 53) ne comprenant que
- d'autres signaux de réception (250d) qui correspondent à une transmission indirecte du premier signal ultrasonore (130) du premier émetteur d'ultrasons (100) au quatrième récepteur d'ultrasons (50),
l'unité de calcul (15) étant en outre réalisée pour
- déterminer à l'intérieur de la deuxième séquence de signaux ultrasonores (31, 32, 33) le deuxième signal de réception directe (140) et/ou d'autres signaux de réception (250b), et
- déterminer à l'intérieur de la troisième séquence de signaux ultrasonores (41, 42, 43) les autres signaux de réception (250c), et
- déterminer à l'intérieur de la quatrième séquence de signaux ultrasonores (51, 52, 53) les autres signaux de réception (250d), et
- comparer la première séquence de signaux ultrasonores (21, 22, 23) reçue avec la deuxième et/ou la troisième et/ou la quatrième séquence de signaux ultrasonores (31, 32, 33, 41, 42, 43, 51, 52, 53) reçue, et
identifier un objet (65, 66) dans la zone entre la bobine primaire (190) et la bobine secondaire (180) du système de charge inductif, si
- la première et/ou la deuxième séquence de signaux ultrasonores (21, 22, 23, 31, 32, 33) ne contiennent aucun premier signal de réception directe (170), et/ou
- la première séquence de signaux ultrasonores (21, 22, 23) contient un premier signal de réception (28) qui correspond à une transmission indirecte du premier signal ultrasonore (130) du premier émetteur d'ultrasons (100) au premier récepteur d'ultrasons (20) et à une réflexion du premier signal ultrasonore (130) sur l'objet (65, 66), et/ou
- la deuxième séquence de signaux ultrasonores (31, 32, 33) contient un deuxième signal de réception (29) qui correspond à une transmission indirecte du premier signal ultrasonore (130) du premier émetteur d'ultrasons (100) au deuxième récepteur d'ultrasons (30) et à une réflexion du premier signal ultrasonore (130) sur l'objet (65, 66), et/ou
- la troisième séquence de signaux ultrasonores (41, 42, 43) contient un troisième signal de réception (26) qui correspond à une transmission indirecte du premier signal ultrasonore (130) du premier émetteur d'ultrasons (100) au troisième récepteur d'ultrasons (40) et à une réflexion du premier signal ultrasonore (130) sur l'objet (65, 66), et/ou
- la quatrième séquence de signaux ultrasonores (51, 52, 53) contient un quatrième signal de réception (27) qui correspond à une transmission indirecte du premier signal ultrasonore (130) du premier émetteur d'ultrasons (100) au quatrième récepteur d'ultrasons (50) et à une réflexion du premier signal ultrasonore (130) sur l'objet (65, 66).

10. Dispositif selon la revendication 9, **caractérisé en ce que** le dispositif comprend en outre un deuxième émetteur d'ultrasons (110) disposé au niveau de la bobine primaire (190) du système de charge inductif, servant à émettre au moins un deuxième signal ultrasonore (131), le premier et le deuxième émetteur d'ultrasons (100, 110) étant disposés de telle sorte que le premier signal ultrasonore (130) est émis en direction du deuxième émetteur d'ultrasons (110) et le deuxième signal ultrasonore (131) est émis en direction du premier émetteur d'ultrasons (100), le troisième et le quatrième récepteur d'ultrasons (40, 50) étant aménagés pour recevoir un troisième et un quatrième signal de réception directe (150, 160) qui correspondent à une transmission directe du deuxième signal ultrasonore (131) du deuxième émetteur d'ultrasons (110) au troisième et au quatrième récepteur d'ultrasons (40, 50).

11. Dispositif selon la revendication 10, **caractérisé en ce que** le premier et le deuxième émetteur d'ultrasons (100, 110) sont réalisés pour émettre en alternance le premier et le deuxième signal ultrasonore (130, 131) et pour coder le premier et le deuxième signal ultrasonore (130, 131).

12. Dispositif selon l'une quelconque des revendications 9 à 11, **caractérisé en ce que** le premier, le deuxième, le troisième et le quatrième récepteur d'ultrasons (20, 30, 40, 50) sont disposés de telle sorte qu'une bobine secondaire (180) du système de charge inductif, disposée au niveau du véhicule (10), se trouve de manière centrée à l'intérieur de la disposition des récepteurs d'ultrasons (20, 30, 40, 50) .

13. Dispositif selon l'une quelconque des revendications 8 à 12, **caractérisé en ce que** chacun des émetteurs d'ultrasons (100, 110) est réalisé pour émettre à plusieurs reprises un premier et/ou un deuxième signal ultrasonore, et chaque récepteur d'ultrasons (20, 30, 40, 50) est réalisé pour recevoir au moins une autre séquence de signaux ultrasonores suivante, l'unité de calcul (15) étant réalisée pour identifier au moins un objet (65, 66) dans la zone entre une bobine primaire (190) et une bobine secondaire (180) d'un système de charge inductif en fonction d'une comparaison de séquences de signaux ultrasonores successives avec les séquences de signaux ultrasonores de référence associées.
